# EUROPÄISCHE PATENTANMELDUNG

(11) **EP 4 793 644 A1**
(43) Veröffentlichungstag der Anmeldung: **19.08.2026**
(21) Anmeldenummer: 25217976.7
(22) Anmeldetag: 24.11.2025
(51) Int. Cl.: G01N 35/00

(54) **ETIKETTIERSYSTEM UND -VERFAHREN ZUM ETIKETTIEREN VON MEDIZINISCHEN LABORPROBEN**

(30) Priorität: 17.02.2025 DE 102025105822
(71) Anmelder: LabMatic Automation GmbH, 31515 Wunstorf (DE)
(72) Erfinder: Lange, Mario, 31515 Wunstorf (DE)
(74) Vertreter: Werner, André

(57) **Zusammenfassung**

Die Erfindung betrifft ein Etikettiersystem und -verfahren zum teilautomatisierten Etikettieren von medizinischen Laborproben (1). Das Etikettiersystem umfasst eine Datenverarbeitungsanlage (4) zur Erzeugung und Übermittlung von Druckaufträgen sowie ein damit verbundenes Etikettiergerät (3) mit einer Probenröhrchenaufnahme (3.2), einem Kappenerkennungssensor (3.3) und einer Etikettendruck- und -aufbringeinheit (3.5). Das Etikettiergerät (3) erfasst die Kappenfarbe und/oder Kappenform der Verschlusskappe (1.2) einer eingesetzten Laborprobe (1), vergleicht diese mit im Druckauftrag vorgegebenen Soll-Daten und bringt das Etikett (2) mit patientenspezifischer Kennzeichnung (2.1) bei Übereinstimmung automatisch in definierter Position und Ausrichtung auf, während bei Abweichung eine Fehlermeldung ausgegeben und/oder die Laborprobe (1) zurückgewiesen wird. Die Erfindung ermöglicht eine standardisierte, fehlerfreie und nachvollziehbare Etikettierung, insbesondere für die präanalytische Probenvorbereitung in medizinischen Laboren.

## Beschreibung

Die Erfindung betrifft ein Etikettiersystem und -verfahren zum teilautomatisierten Etikettieren von medizinischen Laborproben, das heißt von Laborproben, die für medizinische Labortests vorgesehen sind. Das Etikettiersystem und das damit durchgeführte Etikettierverfahren eignen sich für den Einsatz in der medizinischen und labordiagnostischen Probenvorbereitung, insbesondere in der sogenannten Präanalytik klinischer Laborprozesse, in denen Laborproben patientenspezifisch vorbereitet und für nachfolgende Laboruntersuchungen gekennzeichnet werden.

Im klinischen Alltag werden die durchzuführenden Labortests, beispielsweise Bluttests, patientenspezifisch vom behandelnden Arzt festgelegt. Auf dieser Basis bestimmen sich Art und Anzahl der vom Patienten abzunehmenden Laborproben, das heißt, es wird ein patientenspezifisches Laborprobenset aus verschiedenen Laborproben definiert. Entsprechend dieses Laborprobensets stellt das medizinische Fachpersonal im Rahmen der Präanalytik die benötigten Laborproben zusammen.

Eine solche Laborprobe besteht regelmäßig aus einem standardisierten Probenröhrchen und einer ebenfalls standardisierten Verschlusskappe. Die Laborprobe stellt somit ein standardisiertes Probengefäß dar, das entweder bereits mit patientenspezifischem Probenmaterial bzw. Untersuchungsmaterial gefüllt oder - im Regelfall - zur Befüllung hiermit vorgesehen ist.

Das Probenröhrchen besteht üblicherweise aus Glas oder Kunststoff und weist eine zylindrische Form mit genormtem Durchmesser und definierter Länge auf. Es dient der Aufnahme und sicheren Aufbewahrung des patientenspezifischen Probenmaterials während des Transports und der Laboranalyse. An seinem oberen Ende ist das Probenröhrchen mit der Verschlusskappe versehen, die das Innere luftdicht abschließt.

Die Verschlusskappen sind sowohl in Bezug auf die Kappenfarbe als auch die Kappenform standardisiert. Insbesondere die Kappenfarbe dient als Identifikationsmerkmal für die Art der Laborprobe. Die Kappenfarbe kennzeichnet regelmäßig den jeweiligen Röhrchentyp oder die enthaltenen Zusatzstoffe. So wird beispielsweise durch eine rote Kappe ein Serumröhrchen, durch eine grüne Kappe ein Heparinröhrchen und durch eine violette Kappe ein EDTA-Röhrchen gekennzeichnet. Diese Farbcodierung ermöglicht dem medizinischen Fachpersonal eine schnelle und fehlerfreie visuelle Zuordnung der Laborprobe zur vorgesehenen Laboruntersuchung und trägt wesentlich zur Standardisierung und Prozesssicherheit in der präanalytischen Phase bei. Neben der Kappenfarbe kann auch die Kappenform der Verschlusskappe ein charakteristisches Unterscheidungsmerkmal darstellen. Verschlusskappen können beispielsweise flach, gewölbt oder geriffelt ausgebildet sein und sich so zusätzlich haptisch oder optisch voneinander unterscheiden.

Laborproben sind üblicherweise mit einem Etikett versehen, das patientenspezifische Informationen wie einen Nummerncode und den Namen des Patienten enthält. Das Etikett dient der eindeutigen Identifikation der Laborprobe, ihrer Zuordnung zu einem Patienten sowie der automatisierten Weiterverarbeitung in Laborinformationssystemen.

Im Rahmen der Präanalytik erfolgt nach der Zusammenstellung des patientenspezifischen Laborprobensets die Probenabnahme beim Patienten. Dabei werden die Probenröhrchen mit einer erfahrungsbasierten Füllmenge - in der Regel etwa drei Viertel des Behältnisses - mit patientenspezifischem Probenmaterial (zum Beispiel Blut) befüllt. Das so gefüllte Laborprobenset bildet die Grundlage für die nachfolgenden medizinischen Labortests. Anschließend bringt das Fachpersonal manuell Etiketten mit einer Codierung, in der Regel einem Barcode, an den einzelnen Probenröhrchen an. Die Etiketten können über einen Etikettendrucker erstellt werden, der bereits alle relevanten Patientendaten enthält, oder sie werden vorgedruckt und manuell mit Patientendaten beschriftet. Das Aufbringen erfolgt entsprechend den individuellen Gewohnheiten der medizinischen Fachkraft; Unterschiede in Position und Lage der Etiketten sind dabei unvermeidlich. Je nach Vorgehensweise wird die Zuordnung der Codierung zum Patienten vor oder nach dem Etikettieren vorgenommen. Das patientenspezifische Laborprobenset wird zumindest bis zum Abschluss der Etikettierung zusammengehalten. Das Fachpersonal muss hierbei sicherstellen, dass es bis zum Abschluss der Etikettierung zu keinen Verwechslungen mit Laborproben anderer Patienten kommt.

Automatisierte Probenanalysen gewinnen in medizinischen Laboren zunehmend an Bedeutung. Eine zentrale Rolle kommt dabei den Etiketten auf den Laborproben zu, da diese für eine fehlerfreie automatisierte Auslesung und damit für eine schnelle, abweichungsfreie Analyse erforderlich sind. Das Etikettieren erfolgt in vielen Einrichtungen jedoch nach wie vor manuell. Diese Vorgehensweise ist zwar verbreitet, jedoch fehleranfällig, da uneinheitliche Positionierungen, unvollständige Haftungen oder unleserliche Beschriftungen der Etiketten auftreten können.

Neben der manuellen Kennzeichnung haben sich in den letzten Jahren auch vorkodierte oder werkseitig etikettierte Laborproben etabliert. Diese sind beispielsweise mit alphanumerischen oder maschinenlesbaren Codes versehen, um eine durchgängige Rückverfolgbarkeit und eine zuverlässige automatisierte Identifikation im Laborbetrieb zu gewährleisten.

Etikettiergeräte, mit denen Etiketten automatisiert auf Probenröhrchen aufgebracht werden können, sind aus dem Stand der Technik bekannt. So beschreibt CN 208307178 U beispielsweise ein automatisches Etikettiergerät für zylindrische Probenröhrchen kleiner Bauform; hierbei handelt es sich jedoch nicht um medizinische Laborproben mit standardisierter Verschlusskappe.

In der Laborautomation sind darüber hinaus Inspektions- und Bildverarbeitungssysteme bekannt, die zur Identifikation von Laborproben eingesetzt werden. Solche Systeme sind häufig in modulare Präanalytik-Linien integriert und werden in automatisierten Laborstraßen genutzt, um Laborproben anhand von Geometrie, Farbe oder aufgedrucktem Code zu erkennen und zu sortieren.

Aus US 2012/0138674 A1 ist beispielsweise ein maschinelles Bildverarbeitungssystem bekannt, das mittels optischer Bilderfassung Laborproben in einem als Rack ausgebildeten Probenträger erfasst, deren Geometrie auswertet und das Vorhandensein einer Verschlusskappe detektiert.

Bei der Kennzeichnung von medizinischen Laborproben besteht die Herausforderung, eine eindeutige und fehlerfreie Zuordnung zwischen der jeweiligen Laborprobe und den dazugehörigen Patienten- und Auftragsdaten sicherzustellen. Trotz des Einsatzes von Informationssystemen und automatisierten Etikettiergeräten treten weiterhin Zuordnungsfehler auf, insbesondere wenn Laborproben manuell oder ohne zusätzliche Kontrolle etikettiert werden. Solche Fehler können zu fehlerhaften Analysen, Wiederholungen von Laboruntersuchungen und erhöhtem Aufwand in der Probenverwaltung führen.

Zudem ist es schwierig, bei Laborproben mit unterschiedlichen Röhrchentypen, Größen oder Verschlusskappen eine gleichbleibende Etikettierqualität zu erreichen. Ungenaue Positionierungen oder fehlerhafte Zuordnungen von Etiketten können die Lesbarkeit von Codes oder Klarschriftinformationen beeinträchtigen und die automatisierte Weiterverarbeitung behindern. Darüber hinaus besteht ein Bedarf, den Etikettierprozess besser in bestehende Labor- und Krankenhaus-IT-Strukturen einzubinden.

Vor diesem Hintergrund besteht die Aufgabe darin, ein Etikettiersystem und ein zugehöriges Etikettierverfahren bereitzustellen, mit dem die Zuverlässigkeit und Nachvollziehbarkeit des Etikettierprozesses bei Laborproben verbessert, die Fehlerrate reduziert und eine standardisierte, reproduzierbare Etikettierung gewährleistet werden kann.

Diese Aufgabe wird durch ein Etikettiersystem mit den Merkmalen nach Anspruch 1 sowie ein Etikettierverfahren nach Anspruch 14 gelöst. Zweckmäßige Weiterbildungen der Erfindung sind in den Ansprüchen 2 bis 13 aufgeführt.

Das erfindungsgemäße Etikettiersystem und -verfahren dienen zum teilautomatisierten Etikettieren von medizinischen Laborproben. Jede der zu etikettierenden Laborproben umfasst ein standardisiertes Probenröhrchen zur Aufnahme von patientenspezifischem Probenmaterial sowie eine standardisierte Verschlusskappe mit definierter Kappenfarbe und/oder Kappenform. Die Kappenfarbe und/oder Kappenform definiert hierbei die Art der Laborprobe und die entsprechende Art des Probenröhrchens.

Das Etikettiersystem weist ein Etikettiergerät mit einer Probenröhrchenaufnahme auf, die zum definierten Einsetzen der zu etikettierenden Laborprobe eingerichtet ist. Das heißt, bei bestimmungsgemäßer Verwendung wird die Laborprobe so in das Etikettiergerät eingebracht, dass das Probenröhrchen der Laborprobe in der Probenröhrchenaufnahme des Etikettiergeräts eingesetzt ist. Weiterhin umfasst das Etikettiergerät mindestens einen Kappenerkennungssensor, der zur optischen Erfassung der Kappenfarbe und/oder der Kappenform der Verschlusskappe ausgebildet ist. Der Kappenerkennungssensor ist mithin ein optischer Sensor, zum Beispiel ein Kamerasensor.

Das Etikettiersystem umfasst ferner eine in das Etikettiergerät integrierte Etikettendruck- und -aufbringeinheit, die eingerichtet ist, ein Etikett mit einer patientenspezifischen Kennzeichnung zu erstellen und dieses Etikett auf das Probenröhrchen der eingesetzten Laborprobe aufzubringen.

Das Etikettiersystem umfasst ferner eine mit dem Etikettiergerät verbundene Datenverarbeitungsanlage, die dazu eingerichtet ist, Druckaufträge auf Basis der den Laborproben zugeordneten Laborproben- und Patientendaten aus einem Labor- oder Krankenhaus-Informationssystem zu erzeugen und an das Etikettiergerät zu übermitteln. Typischerweise ist das Labor- oder Krankenhaus-Informationssystem ein Labor-Informations-System (LIS), ein Labor-Informations-Management-System (LIMS) und/oder ein Krankenhaus-Informations-System (KIS). Vorzugsweise ist die Datenverarbeitungsanlage eingerichtet, die Laborproben- und Patientendaten vom Labor- oder Krankenhaus-Informationssystem zu empfangen und die Druckaufträge automatisch daraus zu generieren. Das Etikettiergerät ist wiederum eingerichtet, den entsprechenden Druckauftrag teilautomatisiert - in Interaktion mit dem Bedienpersonal - abzuarbeiten.

Das Etikettiergerät ist so ausgestaltet, dass es die vom Kappenerkennungssensor erfasste Kappenfarbe und/oder Kappenform der Verschlusskappe der eingesetzten Laborprobe mit einer in dem der Laborprobe zugeordneten Druckauftrag vorgegebenen Kappenfarbe und/oder Kappenform vergleicht. Bei Übereinstimmung der erfassten und der vorgegebenen Kappenfarbe und/oder Kappenform wird das Etikett automatisch in definierter Position und Ausrichtung auf das Probenröhrchen der eingesetzten Laborprobe aufgebracht. Weichen die erfassten Merkmale von den Vorgaben ab, wird eine Fehlermeldung ausgegeben und/oder die Laborprobe zurückgewiesen, das heißt, die Laborprobe bleibt unetikettiert.

Das erfindungsgemäße Etikettierverfahren zum teilautomatisierten Etikettieren der medizinischen Laborprobe erfolgt mittels des beschriebenen Etikettiersystems, wobei es insbesondere die Datenverarbeitungsanlage und das Etikettiergerät des Etikettiersystems nutzt.

Das Etikettierverfahren beginnt mit dem Generieren eines Druckauftrags auf Basis der der Laborprobe zugeordneten Laborproben- und Patientendaten aus dem Labor- oder Krankenhaus-Informationssystem mittels der Datenverarbeitungsanlage und dem Übermitteln des Druckauftrags an das Etikettiergerät. Der Druckauftrag enthält die für den Etikettiervorgang maßgeblichen Soll-Daten, einschließlich der vorgegebenen Kappenfarbe und/oder Kappenform der Verschlusskappe sowie der patientenspezifischen Kennzeichnung der zu etikettierenden Laborprobe.

In das Etikettiergerät, das eingerichtet ist, den entsprechenden Druckauftrag teilautomatisiert - in Interaktion mit dem Bedienpersonal - abzuarbeiten, wird im nächsten Schritt die Laborprobe in die Probenröhrchenaufnahme eingesetzt.

Nach dem manuellen Einsetzen der Laborprobe erfolgt ein automatisiertes Erfassen der Kappenfarbe und/oder Kappenform der Verschlusskappe der Laborprobe mittels des Kappenerkennungssensors des Etikettiergeräts. Der Kappenerkennungssensor ermittelt die tatsächliche Kappenfarbe und/oder Kappenform als Ist-Daten für den folgenden Abgleich.

Daraufhin wird ein automatisiertes Prüfen auf Übereinstimmung der erfassten Kappenfarbe und/oder Kappenform der Verschlusskappe mit der im Druckauftrag vorgegebenen Kappenfarbe und/oder Kappenform durchgeführt. Nur bei Übereinstimmung wird das Etikett mit der patientenspezifischen Kennzeichnung gedruckt und in definierter Position und Ausrichtung auf das Probenröhrchen der Laborprobe aufgebracht. Andernfalls bleibt die Laborprobe unetikettiert. Dadurch wird sichergestellt, dass der Etikettiervorgang ausschließlich bei korrekter Zuordnung zwischen Laborprobe und Druckauftrag ausgeführt wird.

Abschließend sieht das Verfahren das Ausgeben der Laborprobe vor. Damit endet der teilautomatisierte Etikettiervorgang, und die Laborprobe steht für nachfolgende Prozessschritte bereit.

Wird eine Laborprobe zurückgewiesen, hat das Bedienpersonal die Möglichkeit, den Mangel zu beheben und eine (andere) Laborprobe mit korrekter Verschlusskappe einzusetzen. Der Prüfvorgang wird wiederholt, bis eine korrekt erkannte Laborprobe eingesetzt wurde. Diese wird schließlich etikettiert. Die Kappenprüfung wird bis zur Feststellung der Übereinstimmung wiederholt.

Das erfindungsgemäße Etikettiersystem und das zugehörige Etikettierverfahren erlauben es, den Etikettierprozess medizinischer Laborproben durch eine auftragsgeführte Identitätsprüfung, eine integrierte Etikettenerzeugung und -applikation in definierter Position und Ausrichtung sowie ein unmittelbares Fehlermanagement grundlegend abzusichern und zu standardisieren. Zentral ist hierbei, dass die Kappenfarbe und/oder Kappenform der eingesetzten Laborprobe vor dem Etikettieren automatisiert erfasst und mit den im Druckauftrag vorgegebenen Soll-Merkmalen verglichen wird. Erst bei Übereinstimmung wird das Etikett mit patientenspezifischer Kennzeichnung erstellt und automatisch in definierter Position und Ausrichtung auf das Probenröhrchen der Laborprobe aufgebracht. Dadurch wird die Zuordnung von Laborprobe und patientenspezifischem Datensatz nicht nur dokumentiert, sondern prozessual erzwungen. Diskrepanzen, die beim Etikettieren ohne vorgelagerten Abgleich entstehen und erst nachgelagert erkannt werden, werden damit systematisch ausgeschlossen.

Die unmittelbare Anbindung an die Datenverarbeitungsanlage, die Druckaufträge aus einem Labor- oder Krankenhaus-Informationssystem (LIS, LIMS, KIS) erzeugt und an das Etikettiergerät übermittelt, sorgt für eine durchgängige Datenkette vom elektronischen Auftrag bis zur etikettierten Laborprobe. Manuelle Übertragungen, Abschreibfehler und Medienbrüche werden vermieden, die Rückverfolgbarkeit erhöht und die Prozesszeiten in der Präanalytik verkürzt. Im Gegensatz zu Lösungen ohne IT-Integration wird die patientenspezifische Kennzeichnung direkt aus den Laborproben- und Patientendaten generiert und unterliegt keiner freien Interpretation durch das Bedienpersonal.

Die Integration der Etikettendruck- und -aufbringeinheit in das Etikettiergerät gewährleistet eine reproduzierbare Etikettierung in definierter Position und Ausrichtung. Abweichungen in Lage und Drehstellung, wie sie bei manueller Applikation häufig auftreten und die maschinelle Lesbarkeit beeinträchtigen, werden verhindert. Das Etikett wird erst dann erzeugt und appliziert, wenn der vorgelagerte Abgleich der Kappenfarbe und/oder Kappenform erfolgreich war, sodass fehlerhafte Etikettenzuordnungen praktisch ausgeschlossen sind. Ergänzend stellt die Probenröhrchenaufnahme ein definiertes Einsetzen der Laborprobe sicher und schafft damit stabile Mess- und Applikationsbedingungen für die nachfolgende Prüfung und das Aufbringen des Etiketts.

Ein weiterer Vorteil liegt im integrierten Fehlermanagement: Weicht die erfasste Kappenfarbe und/oder Kappenform von den Soll-Vorgaben ab, wird eine Fehlermeldung ausgegeben und/oder die Laborprobe zurückgewiesen. Diese unmittelbare Prozessentscheidung verhindert, dass unpassende Proben weiterbearbeitet werden, und verlagert Korrekturen nicht in nachgelagerte Prüf- oder Analyseabschnitte. Die Kombination aus automatisiertem Erfassen, auftragsbezogenem Vergleichen, bedingter Etiketterzeugung und definierter Applikation schafft damit einen qualitätsgesicherten Ablauf, der sich durch hohe Wiederholgenauigkeit, reduzierte Fehlerquoten und verbesserte Automatisierbarkeit auszeichnet.

Das erfindungsgemäße Etikettiersystem und das zugehörige Etikettierverfahren ermöglichen insofern eine zuverlässige und standardisierte Etikettierung medizinischer Laborproben, die eine eindeutige Zuordnung zwischen Laborprobe und Patientendaten sicherstellt und gleichzeitig manuelle Fehlerquellen im Etikettierprozess weitestgehend reduziert.

Das Etikettiersystem eignet sich für die standardisierte Kennzeichnung von Blutentnahmeröhrchen, Urin- und Serumprobenröhrchen sowie anderen standardisierten Probenbehältnissen, die in automatisierten Laboranalyseketten verwendet werden.

Vorteilhaft ist die Anwendung des Etikettiersystems in Krankenhaus- und Zentrallaboren, medizinischen Diagnostikzentren, Blutspendeeinrichtungen, Forschungslaboren sowie in biotechnologischen und pharmazeutischen Produktions- und Qualitätssicherungslaboren, in denen eine präzise, reproduzierbare und dokumentierbare Kennzeichnung von Laborproben erforderlich ist.

Darüber hinaus eignet sich die Erfindung auch für den Einsatz in dezentralen oder ambulanten Laborarbeitsplätzen, etwa in Arztpraxen, klinischen Abteilungen oder Blutentnahmestellen, bei denen eine zuverlässige, automatisierbare und datentechnisch integrierbare Etikettierung von Laborproben erforderlich ist.

Gemäß einer Ausgestaltung des erfindungsgemäßen Etikettiersystems umfasst das Etikettiergerät eine Probenröhrchenerkennungssensorik, die zur Erfassung der Größe und/oder der Form des Probenröhrchens ausgebildet ist. Durch die Erfassung der Größe und/oder der Form des Probenröhrchens wird das Etikettiergerät in die Lage versetzt, das Probenröhrchen mit den für die Etikettierung erforderlichen Merkmalen bereitzustellen und das Etikettieren auf das erfasste Probenröhrchen auszurichten. Zudem ermöglicht diese eine zusätzliche Soll-Ist-Prüfung durch Datenabgleich mit den im Druckauftrag hinterlegten Daten in Bezug auf die korrekte Größe und/oder die korrekte Form des Probenröhrchens. Das Etikettiergerät kann dem Bedienpersonal in gleicher Weise wie bei der Prüfung der Kappenfarbe und/oder Kappenform anhand der erfassten Probenröhrchengeometrie signalisieren, ob ein korrektes oder falsches Probenröhrchen eingesetzt ist. Ist eine Laborprobe mit korrektem Probenröhrchen eingesetzt, wird diese - bei gleichzeitiger Übereinstimmung der Kappenfarbe und/oder Kappenform - etikettiert; andernfalls wird sie zurückgewiesen bzw. ausgeworfen. Diese Probenröhrchenprüfung schafft mithin eine zusätzliche Redundanz zur Kappenprüfung.

Bei Ausführung des Etikettiergeräts mit der Probenröhrchenerkennungssensorik kann zudem vorgesehen sein, das Etikett positionsabhängig in Abhängigkeit der durch die Probenröhrchenerkennungssensorik erfassten Größe und/oder Form des Probenröhrchens auf dem Probenröhrchen aufzubringen. Durch das positionsabhängige Aufbringen in Abhängigkeit der Größe und/oder der Form wird sichergestellt, dass das Aufbringen des Etiketts an das Probenröhrchen mit seiner erfassten Größe und/oder Form in Übereinstimmung steht. Die automatische Erfassung und Etikettierung in Abhängigkeit von der Größe und/oder der Form des jeweiligen Probenröhrchens ermöglicht eine flexible Nutzung in verschiedenen Laborszenarien und mit verschiedenen Probenröhrchenformaten.

Das Etikettiergerät kann ferner eine Auswurfeinheit umfassen, die die Laborprobe automatisch aus der Probenröhrchenaufnahme auswirft. Der automatische Auswurf der Laborprobe signalisiert die fertige Bearbeitung der jeweiligen Laborproben, entweder als etikettierte Laborprobe oder als unetikettierte (zurückgewiesene) Laborprobe. In Kombination mit der Auswurfeinheit kann das Etikettiergerät zudem eine Auffangschale zur Aufnahme der von der Auswurfeinheit ausgeworfenen Laborprobe aufweisen.

Das Etikettiergerät kann dazu eingerichtet sein, das Etikett neben der patientenspezifischen Kennzeichnung zusätzlich mit mindestens einer Füllstandsmarkierung zu versehen, die eine minimale und/oder maximale Soll-Füllmenge des im Probenröhrchen aufzunehmenden Probenmaterials kennzeichnet. Dadurch kann das medizinische Personal während der Probenentnahme direkt erkennen, ob die erforderliche Menge an Probenmaterial (zum Beispiel Blut) entnommen wurde. Diese visuelle Kontrolle trägt zu einer höheren Probenqualität bei und reduziert die Notwendigkeit von erneuten Entnahmen, die für den Patienten unangenehm sein können.

Gemäß einer weiteren Ausgestaltung ist das Etikettiergerät eingerichtet, die patientenspezifische Kennzeichnung so zu erstellen, dass diese sowohl eine Beschriftung in Klarschrift als auch einen maschinenlesbaren Code umfasst. Die Beschriftung in Klarschrift kann zum Beispiel den Patientennamen oder auch einen alphanumerischen Code beinhalten. Der maschinenlesbare Code ist vorzugsweise als Barcode, QR-Code und/oder DataMatrix-Code ausgebildet. Die Codierung der Laborproben mit dem maschinenlesbaren Code erleichtert die digitale Erfassung und ermöglicht eine reibungslose Weiterverarbeitung in Laboranalysesystemen. Dies trägt erheblich zur Automatisierung und Digitalisierung von Laborprozessen bei und verkürzt die Bearbeitungszeit von Probenanalysen.

Gemäß einer weiteren Ausgestaltung umfasst das Etikettiergerät einen Positionssensor und/oder eine Mikroschaltereinheit, die jeweils zur Erkennung des korrekt eingesetzten Zustands der Laborprobe eingerichtet sind. Wird die Laborprobe in die Probenröhrchenaufnahme eingesetzt, erkennt der Positionssensor und/oder die Mikroschaltereinheit die korrekte Positionierung. Zum Beispiel wird die Laborprobe bis auf Anschlag in die Probenröhrchenaufnahme eingeschoben: Der Positionssensor und/oder die Mikroschaltereinheit registriert, dass das Probenröhrchen auf Anschlag eingeschoben wurde, und signalisiert den korrekten Sitz der Laborprobe in der Probenröhrchenaufnahme.

Das Etikettiergerät kann ferner ein Steuerungs- und Kommunikationsmodul umfassen, das zur Datenkommunikation mit der Datenverarbeitungsanlage über eine Datenleitung oder eine drahtlose Verbindung eingerichtet ist.

Die Etikettendruck- und -aufbringeinheit kann beispielsweise als Thermotransfer- oder Thermodirektdrucker ausgebildet sein, der die Etiketten mit definierter Standardgröße druckt.

Gemäß einer weiteren Ausgestaltung ist das Etikettiergerät zur Etikettierung mehrerer der Laborproben, die Teil eines patientenspezifischen Laborprobensets sind, ausgebildet, wobei das Etikettiergerät eingerichtet ist, die nacheinander einzusetzenden Laborproben des Laborprobensets anhand eines patientenspezifischen Sammel-Druckauftrags in einer vorgegebenen Reihenfolge abzuarbeiten. Ein solcher Sammel-Druckauftrag beinhaltet mehrere der vorstehend beschriebenen (Einzel-)Druckaufträge. Die Datenverarbeitungsanlage ist hierbei insbesondere eingerichtet, auf Basis der Laborproben- und Patientendaten, das heißt patientenspezifisch vom behandelnden Arzt festgelegter Labortests, das patientenspezifische Laborprobenset zu bestimmen und darauf basierend den Sammel-Druckauftrag zur Erstellung des entsprechenden patientenspezifischen Laborprobensets zu erstellen und an das Etikettiergerät zu senden. Dieser patientenspezifische Sammel-Druckauftrag für ein gesamtes patientenspezifisches Laborprobenset beinhaltet demnach die (Einzel-)Druckaufträge für die zu etikettierenden Laborproben. Das Etikettieren der jeweiligen Laborprobe erfolgt nach dem bereits beschriebenen Ablauf, einschließlich der Prüfung der korrekten Kappenfarbe und/oder Kappenform. Für das Etikettieren einer der einzelnen Laborproben des Laborprobensets gibt das Etikettiergerät dem Bedienpersonal zum Beispiel vor, welche Kappenfarbe die einzusetzende Laborprobe aufweisen muss. Das heißt, das Bedienpersonal wird aufgefordert, eine Laborprobe mit einer bestimmten Kappenfarbe einzusetzen. Das Etikettieren der einzelnen Laborproben des Laborprobensets erfolgt so nacheinander, bis alle Laborproben des Laborprobensets etikettiert sind. Durch die jeweilige Kappenfarbenprüfung wird sichergestellt, dass das Laborprobenset nach Fertigstellung des Sammel-Druckauftrags die gewünschte Zusammensetzung nach Art und Anzahl der jeweiligen Laborproben aufweist. Bei Aufbringen der Füllstandsmarkierung kann diese individuell für die jeweilige Laborprobe festgelegt werden.

Die Erfindung ist nachfolgend anhand eines Ausführungsbeispiels und mit Bezug auf die schematischen Zeichnungen näher erläutert, wobei gleiche oder ähnliche Merkmale mit gleichen Bezugszeichen versehen sind; dazu zeigen:
- Fig. 1:: das Etikettiersystem und die zu etikettierenden Laborproben in perspektivischer Darstellung in mehreren Teilansichten;
- Fig. 2:: das Etikettiergerät und eine zu etikettierende Laborprobe in perspektivischer Darstellung in mehreren Teilansichten.

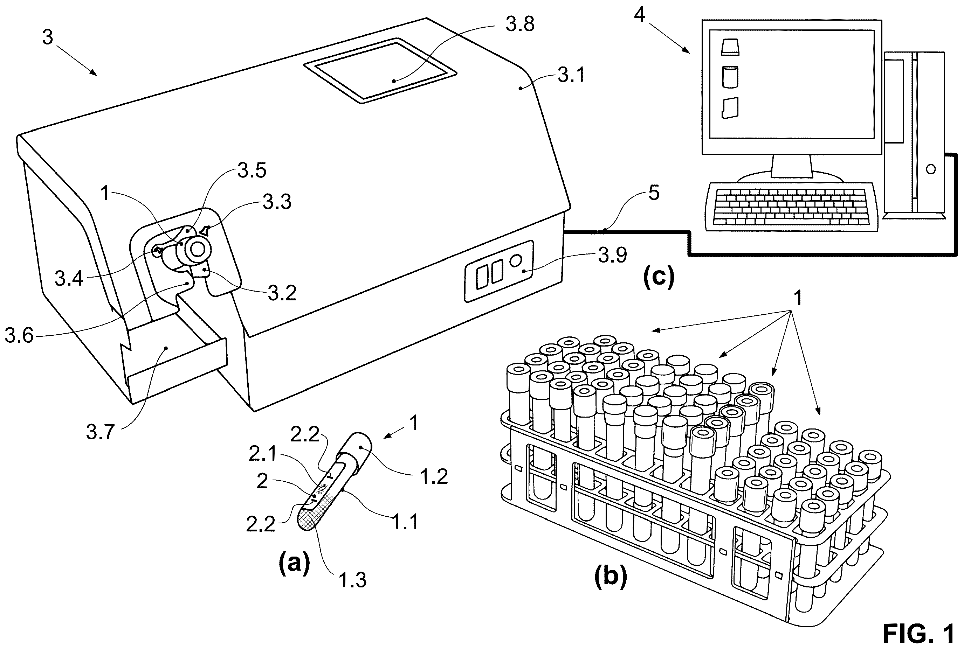

Das Etikettiersystem zum teilautomatisierten Etikettieren der medizinischen Laborproben 1 gemäß Fig. 1 umfasst - siehe Teilansicht (c) - als Hauptkomponenten das Etikettiergerät 3 sowie die Datenverarbeitungsanlage 4.

In der Teilansicht (a) der Fig. 1 ist beispielhaft eine typische, fertig etikettierte Laborprobe 1 dargestellt. Das Probenröhrchen 1.1 dient zur Aufnahme des Probenmaterials 1.3, beispielsweise Blut. An seinem oberen Ende ist das Probenröhrchen 1.1 mit der Verschlusskappe 1.2 versehen, die das Probenröhrchen 1.1 luftdicht verschließt und eine definierte Kappenfarbe und/oder Kappenform aufweist. Auf der äußeren Mantelfläche des Probenröhrchens 1.1 ist das Etikett 2 angebracht, das die patientenspezifische Kennzeichnung 2.1 trägt. Auf dem Etikett 2 ist zudem die Füllstandsmarkierung 2.2 angebracht, die die minimale und/oder maximale Soll-Füllmenge des aufzunehmenden Probenmaterials 1.3 kennzeichnet.

Die Probenröhrchen 1.1 der zu etikettierenden Laborproben 1 besitzen typischerweise Durchmesser im Bereich von 11 mm bis 16 mm und eine Länge im Bereich von 75 mm bis 130 mm. Sie können aus Glas oder Kunststoff bestehen. Die gängige Standardgröße des Etiketts 2 liegt bei 50 mm × 30 mm.

In der Teilansicht (b) der Fig. 1 ist eine Mehrzahl von Laborproben 1 gezeigt, die in einem typischen - als Rack bezeichneten - Probenträger aufgenommen sind. Die Teilansicht (b) soll die verschiedenen Laborproben 1 veranschaulichen, deren Verschlusskappen 1.2 sich in Kappenfarbe und/oder Kappenform und deren Probenröhrchen 1.1 sich in Größe und/oder Form unterscheiden.

Die Teilansicht (c) der Fig. 1 zeigt das Etikettiergerät 3 und die mit dem Etikettiergerät 3 über die Datenleitung 5 verbundene Datenverarbeitungsanlage 4.

Das Etikettiergerät 3 ist in einem Gehäuse 3.1 untergebracht, das die funktionellen Baugruppen schützt. In die an der linken Seite befindliche Probenröhrchenaufnahme 3.2 wird die Laborprobe 1 zum Etikettieren eingesetzt, das heißt axial bis zur Endposition eingeschoben. Im Bereich der Probenröhrchenaufnahme 3.2 befindet sich der Kappenerkennungssensor 3.3, der die Kappenfarbe und/oder Kappenform der Verschlusskappe 1.2 optisch erfasst. Ferner ist die Probenröhrchenerkennungssensorik 3.4 integriert, die zur Erfassung der Größe und/oder Form des eingesetzten Probenröhrchens 1.1 eingerichtet ist.

Im Inneren des Gehäuses 3.1 befindet sich die Etikettendruck- und -aufbringeinheit 3.5, die das Etikett 2 mit der patientenspezifischen Kennzeichnung 2.1 erstellt und dieses in definierter Position und Ausrichtung auf das Probenröhrchen 1.1 der eingesetzten Laborprobe 1 aufbringt. Das Etikettiergerät 3 umfasst zudem die Auswurfeinheit 3.6, die in der in Fig. 1 dargestellten Ausführung des Etikettiergeräts 3 einen Teil der Probenröhrchenaufnahme 3.2 bildet. Die Auswurfeinheit 3.6 klappt zum Auswerfen der Laborprobe 1 nach unten weg, öffnet so die Probenröhrchenaufnahme 3.2 und wirft die Laborprobe 1 in die Auffangschale 3.7 aus.

Frontal am Gehäuse 3.1 des Etikettiergeräts 3 befindet sich die Bedienoberfläche 3.9 zur Bedienung der wichtigsten Funktionen des Etikettiergeräts 3. In das Etikettiergerät 3 ist das Steuerungs- und Kommunikationsmodul 3.8 integriert, das die interne Steuerung übernimmt und die Datenkommunikation mit der Datenverarbeitungsanlage 4 ermöglicht.

Die Datenverarbeitungsanlage 4 dient zur Erzeugung und Übermittlung von Druckaufträgen auf Basis der den Laborproben 1 zugeordneten Laborproben- und Patientendaten. Die Datenverarbeitungsanlage 4 ist mit dem Labor- oder Krankenhaus-Informationssystem verknüpft. Sie verfügt über eine grafische Benutzeroberfläche zur Interaktion mit dem Bedienpersonal. Die Datenverarbeitungsanlage 4 kann hierzu, wie in Fig. 1 dargestellt, zum Beispiel ein herkömmlicher Personalcomputer mit Monitor, Tastatur und Recheneinheit sein.

Das dargestellte Ausführungsbeispiel verdeutlicht das Zusammenwirken aller wesentlichen Komponenten: Die Laborprobe 1 wird in die Probenröhrchenaufnahme 3.2 eingesetzt, die Kappenfarbe und/oder Kappenform wird durch den Kappenerkennungssensor 3.3 erfasst, und bei Übereinstimmung mit dem in der Datenverarbeitungsanlage 4 hinterlegten Druckauftrag wird das Etikett 2 automatisch durch die Etikettendruck- und -aufbringeinheit 3.5 erstellt und in definierter Position auf das Probenröhrchen 1.1 der Laborprobe 1 aufgebracht. Anschließend kann die Laborprobe 1 über die Auswurfeinheit 3.6 ausgeworfen und in der Auffangschale 3.7 gesammelt werden. Auf diese Weise ermöglicht das Etikettiergerät 3 eine standardisierte, fehlerfreie und reproduzierbare Etikettierung der medizinischen Laborproben 1.

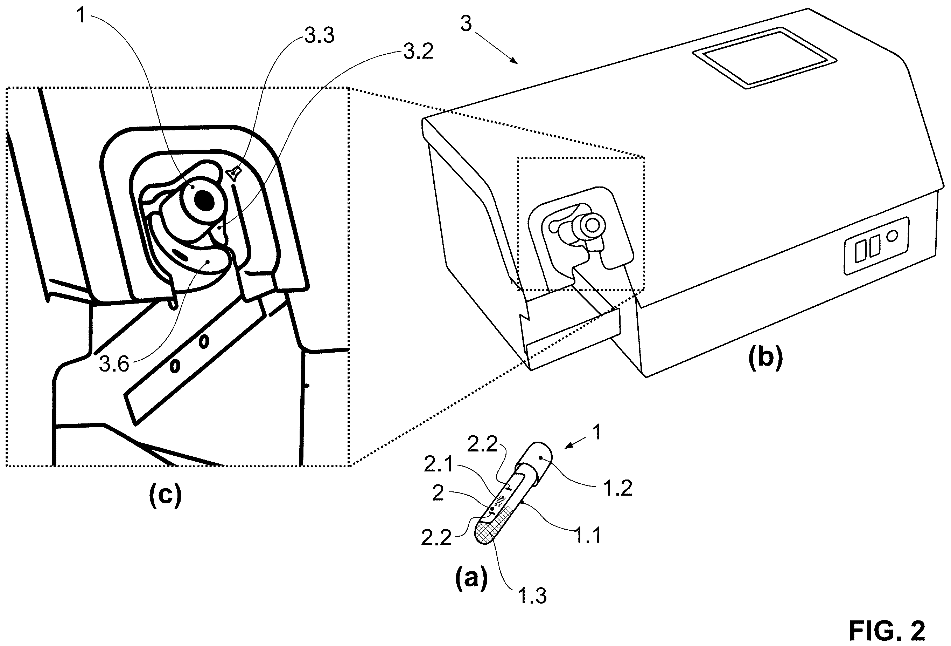

Fig. 2 zeigt - neben den bereits in Fig. 1 dargestellten Teilansichten (a) und (b) - in Teilansicht (c) eine Detaildarstellung des Etikettiergeräts 3 in einer vergrößerten Ansicht des vorderen Gerätebereichs. Die Darstellung verdeutlicht insbesondere den Aufbau der Probenröhrchenaufnahme 3.2, die Aufnahme der eingesetzten Laborprobe 1, die Positionierung des Kappenerkennungssensors 3.3 und die Ausbildung der nach unten klappbaren Auswurfeinheit 3.6.

### Bezugszeichenliste

- 1: Laborprobe
- 1.1: Probenröhrchen
- 1.2: Verschlusskappe
- 1.3: Probenmaterial
- 2: Etikett
- 2.1: Kennzeichnung
- 2.2: Füllstandsmarkierung
- 3: Etikettiergerät
- 3.1: Gehäuse
- 3.2: Probenröhrchenaufnahme
- 3.3: Kappenerkennungssensor
- 3.4: Probenröhrchenerkennungssensorik
- 3.5: Etikettendruck- und -aufbringeinheit
- 3.6: Auswurfeinheit
- 3.7: Auffangschale
- 3.8: Steuerungs- und Kommunikationsmodul
- 3.9: Bedienoberfläche
- 4: Datenverarbeitungsanlage
- 5: Datenleitung

## Patentansprüche

1. Etikettiersystem zum teilautomatisierten Etikettieren von medizinischen Laborproben (1), wobei jede der zu etikettierenden Laborproben (1) ein standardisiertes Probenröhrchen (1.1) zur Aufnahme von patientenspezifischem Probenmaterial (1.3) sowie eine standardisierte Verschlusskappe (1.2) mit definierter Kappenfarbe und/oder Kappenform aufweist,
wobei das Etikettiersystem umfasst:
- ein Etikettiergerät (3) mit einer Probenröhrchenaufnahme (3.2) zum definierten Einsetzen der zu etikettierenden Laborprobe (1),
- mindestens einen Kappenerkennungssensor (3.3) zur optischen Erfassung der Kappenfarbe und/oder der Kappenform der Verschlusskappe (1.2),
- eine in das Etikettiergerät (3) integrierte Etikettendruck- und -aufbringeinheit (3.5) zum Erstellen eines Etiketts (2) mit einer patientenspezifischen Kennzeichnung (2.1) und Aufbringen des Etiketts (2) auf das Probenröhrchen (1.1) der eingesetzten Laborprobe (1), und
- eine mit dem Etikettiergerät (3) verbundene Datenverarbeitungsanlage (4), die zur Erzeugung und Übermittlung von Druckaufträgen auf Basis der den Laborproben (1) zugeordneten Laborproben- und Patientendaten aus einem Labor- oder Krankenhaus-Informationssystem eingerichtet ist,
wobei das Etikettiergerät (3) ausgebildet ist,
- die vom Kappenerkennungssensor (3.3) erfasste Kappenfarbe und/oder Kappenform der Verschlusskappe (1.2) der eingesetzten Laborprobe (1) mit einer in dem der eingesetzten Laborprobe (1) zugeordneten Druckauftrag vorgegebenen Kappenfarbe und/oder Kappenform zu vergleichen,
- bei Übereinstimmung der Kappenfarbe und/oder der Kappenform das Etikett (2) automatisch in definierter Position und Ausrichtung auf das Probenröhrchen (1.1) der eingesetzten Laborprobe (1) mittels der
Etikettendruck- und -aufbringeinheit (3.5) aufzubringen, und
- bei Abweichung eine Fehlermeldung auszugeben und/oder die Laborprobe (1) zurückzuweisen.

2. Etikettiersystem nach Anspruch 1, **dadurch gekennzeichnet, dass** das Etikettiergerät (3) zusätzlich eine Probenröhrchenerkennungssensorik (3.4) umfasst, die zur Erfassung der Größe und/oder der Form des Probenröhrchens (1.1) der eingesetzten Laborprobe (1) ausgebildet ist.

3. Etikettiersystem nach Anspruch 2, **dadurch gekennzeichnet, dass** das Etikettiergerät (3) eingerichtet ist, das Etikett (2) positionsabhängig in Abhängigkeit der durch die Probenröhrchenerkennungssensorik (3.4) erfassten Größe und/oder Form des Probenröhrchens (1.1) auf dem Probenröhrchen (1.1) der eingesetzten Laborprobe (1) aufzubringen.

4. Etikettiersystem nach einem der Ansprüche 1 bis 3, **dadurch gekennzeichnet, dass** das Etikettiergerät (3) eine Auswurfeinheit (3.6) umfasst, die die Laborprobe (1) automatisch aus der Probenröhrchenaufnahme (3.2) auswirft.

5. Etikettiersystem nach Anspruch 4, **dadurch gekennzeichnet, dass** das Etikettiergerät (3) eine Auffangschale (3.7) zur Aufnahme der von der Auswurfeinheit (3.6) ausgeworfenen Laborprobe (1) umfasst.

6. Etikettiersystem nach einem der Ansprüche 1 bis 5, **dadurch gekennzeichnet, dass** das Etikettiergerät (3) eingerichtet ist, das Etikett (2) neben der patientenspezifischen Kennzeichnung (2.1) zusätzlich mit mindestens einer Füllstandsmarkierung (2.2) zu versehen, die eine minimale und/oder maximale Soll-Füllmenge des aufzunehmenden Probenmaterials (1.3) kennzeichnet.

7. Etikettiersystem nach einem der Ansprüche 1 bis 6, **dadurch gekennzeichnet, dass** das Etikettiergerät (3) eingerichtet ist, das Etikett (2) so zu erstellen, dass die patientenspezifische Kennzeichnung (2.1) sowohl eine Beschriftung in Klarschrift als auch einen maschinenlesbaren Code umfasst.

8. Etikettiersystem nach Anspruch 7, **dadurch gekennzeichnet, dass** der maschinenlesbare Code als Barcode, QR-Code und/oder DataMatrix-Code ausgebildet ist.

9. Etikettiersystem nach einem der Ansprüche 1 bis 8, **dadurch gekennzeichnet, dass** das Etikettiergerät (3) einen Positionssensor und/oder eine Mikroschaltereinheit umfasst, die jeweils zur Erkennung des korrekt eingesetzten Zustands der Laborprobe (1) eingerichtet sind.

10. Etikettiersystem nach einem der Ansprüche 1 bis 9, **dadurch gekennzeichnet, dass** das Etikettiergerät (3) ein Steuerungs- und Kommunikationsmodul (3.8) umfasst, das zur Datenkommunikation mit der Datenverarbeitungsanlage (4) über eine Datenleitung (5) oder eine drahtlose Verbindung eingerichtet ist.

11. Etikettiersystem nach einem der Ansprüche 1 bis 10, **dadurch gekennzeichnet, dass** die Etikettendruck- und -aufbringeinheit (3.5) als Thermotransfer- oder Thermodirektdrucker ausgebildet ist, der die Etiketten (2) mit definierter Standardgröße druckt.

12. Etikettiersystem nach einem der Ansprüche 1 bis 11, **dadurch gekennzeichnet, dass** das Etikettiergerät (3) zur Etikettierung mehrerer der Laborproben (1), die Teil eines patientenspezifischen Laborprobensets sind, ausgebildet ist, und wobei das Etikettiergerät (3) eingerichtet ist, die nacheinander einzusetzenden Laborproben (1) des Laborprobensets anhand eines patientenspezifischen Sammel-Druckauftrags in einer vorgegebenen Reihenfolge abzuarbeiten.

13. Etikettiersystem nach einem der Ansprüche 1 bis 12, **dadurch gekennzeichnet, dass** die Datenverarbeitungsanlage (4) eingerichtet ist, die Laborproben- und Patientendaten aus dem Labor- oder Krankenhaus-Informationssystem zu empfangen und die Druckaufträge automatisch daraus zu generieren.

14. Verfahren zum teilautomatisierten Etikettieren einer medizinischen Laborprobe (1) mittels eines Etikettiersystems nach einem der Ansprüche 1 bis 13, **gekennzeichnet durch** die Verfahrensschritte:
- Generieren eines Druckauftrags auf Basis der der Laborprobe (1) zugeordneten Laborproben- und Patientendaten aus einem Labor- oder Krankenhaus-Informationssystem mittels der Datenverarbeitungsanlage (4) und Übermitteln des Druckauftrags an das Etikettiergerät (3);
- Einsetzen der Laborprobe (1) in die Probenröhrchenaufnahme (3.2) des Etikettiergeräts (3);
- automatisiertes Erfassen der Kappenfarbe und/oder Kappenform der Verschlusskappe (1.2) der Laborprobe (1) mittels des Kappenerkennungssensors (3.3) des Etikettiergeräts (3);
- automatisiertes Prüfen auf Übereinstimmung der Kappenfarbe und/oder Kappenform der Verschlusskappe (1.2) der Laborprobe (1) mit einer in dem der eingesetzten Laborprobe (1) zugeordneten Druckauftrag vorgegebenen Kappenfarbe und/oder Kappenform der Verschlusskappe (1.2), wobei nur bei Übereinstimmung das Etikett (2) mit der patientenspezifischen Kennzeichnung (2.1) gedruckt und auf das Probenröhrchen (1.1) der Laborprobe (1) in definierter Position und Ausrichtung aufgebracht wird;
- Ausgeben der Laborprobe (1).
- Es folgen 2 Seiten Zeichnungen -
